# EUROPEAN PATENT APPLICATION

(11) **EP 2 653 971 A1**
(43) Date of publication of application: **23.10.2013**
(21) Application number: 11849029.1
(22) Date of filing: 13.12.2011
(51) Int. Cl.: G06F 12/00, G06T 1/00

(54) **DATA MANAGEMENT DEVICE, SYSTEM, PROGRAM, AND METHOD**

(30) Priority: 13.12.2010 JP 2010277112
(71) Applicant: NEC Corporation, Tokyo 108-8001 (JP)
(72) Inventor: TAKANO, Yousuke, Tokyo 108-8001 (JP)
(74) Representative: Vossius & Partner
(86) International application number: PCT/JP2011/079278
(87) International publication number: WO 2012/081720

(57) **Abstract**

The hit rate of when the application using a plurality of classes of data whose generation times are close to each other is not sufficiently high currently.

A data management device of the present invention includes: utilization status storage means for storing a combination of a plurality of data classes used by an application; combination creation means for extracting, from data storage means storing data which is given one of the data classes, a combination of the data in which a difference of generation times between the data in the combination is within a prescribed time interval, from the combination of the data given respective ones of the data classes stored in the utilization status storage means; and discard determination means for determining, from the data stored in the data storage means, data other than those belonging to the extracted the combination to be candidates of deletion.

## Description

### Technical Field

The present invention relates to a data management device, system, program and method.

### Background Art

There is a kind of data cache to hold data acquired via a network from a server system existing at a remote site and the like for later use. For example, almost web browsers improve their responsiveness by holding the acquired data as a local file for a certain period of time and, when receiving a request for the same data from an application or the like, reusing the data stored in a cache. On the other hand, because devices have only a finite space (memories, disks and the like) for holding the data caches, they need to discard the data which are expected not to be used even in the future and thus to secure a space which can be used newly as a cache.

As a policy of discarding the data, first, it is required to affirmatively retain the data expected to receive future access (hit rate improvement). Also required is to avoid a situation where a large amount of cache space is spent for the specific data and the other data thus cannot be held in the cache (realization of fairness).

A general method for realizing the hit rate improvement is the one which determines the data of both low access frequency and the oldest access time (LRU: Least Recently Used) to be a discard candidate.

As an example of a technology for realizing the hit rate improvement, there is mentioned Patent Literature 1. Patent Literature 1, primarily on the image data as an example, takes a strategy of determining importance of the data on the basis of its time information, attribute information, resolution, frame rate or the like, and preferentially discarding the data of little importance. By thus using attribute information on the data, the cache hit rate can be improved.

On the other hand, there are applications which perform a process using a plurality of classes of data input from different sensors. For example, one of the applications identifies a position of a person more accurately by using both voice information and image information. Another one of the applications measures the distance to a target object captured in an image by using the parallax between two pieces of image information. The generation times of the respective data used in combination in these cases are required to coincide with or be close to each other. However, because generation timings of the respective data (for example, inputs from sensors and the like) are not necessarily synchronized with each other, the data of various generation times resultantly coexist in the data cache. As a result, with the above-described technology, the data hit rate of applications which perform a process using the contents of a plurality of classes of data is not sufficiently high for practical use.

### [Citation List]

### [Patent Literature]

[Patent Literature 1] Japanese Patent Application Laid-Open No. 2000-209258.

### Summary of Invention

### Problem to be Solved by the Invention

With the above-mentioned technology, the cache hit rate is not sufficiently high in the case an application using a plurality of classes of data whose generation times are close to each other accesses the data. It is because the above-mentioned technology determines whether to discard the data or not from the cache only on the basis of attribute information on each data.

For the purpose of solving the above-mentioned problem, one objective of the present invention is to provide a data management device, system, program and method which improve the cache hit rate in the case an application using a plurality of classes of data whose generation times are close to each other accesses the data.

### Solution to Problem

One aspect of the present invention is a data management device which includes: utilization status storage means for storing a combination of a plurality of data classes used by an application; combination creation means for extracting, from data storage means storing data which is given one of the data classes, a combination of the data in which a difference of generation times between the data in the combination is within a prescribed time interval, from the combination of the data given respective ones of the data classes stored in the utilization status storage means; and discard determination means for determining, from the data stored in the data storage means, data other than those belonging to the extracted combination to be candidates of deletion.

Further, the present invention provides a data management program which causes a computer to execute: a combination creation step for extracting, from data storage means storing data which is given one of the data classes, a combination of the data in which a difference of generation times between the data in the combination is within a prescribed time interval, from the combination of the data given respective ones of the data classes stored in utilization status storage means storing a combination of a plurality of data classes used by an application; and a discard determination step for determining, from the data stored in the data storage means, data other than those belonging to the extracted combination to be candidates of deletion.

Still further, the present invention provides a data management method which includes: extracting, from data storage means storing data which is given one of data classes, a combination of the data in which a difference of generation times between the data in the combination is within a prescribed time interval, from the combination of the data given respective ones of the data classes stored in utilization status storage means storing a combination of a plurality of data classes used by an application; and determining, from the data stored in the data storage means, data other than those belonging to the extracted combination to be candidates of deletion.

### Advantageous Effects of Invention

The present invention provides a data management device, system, program and method which can improve the hit rate in the case an application using a plurality of classes of data whose generation times are close to each other accesses the data.

### Brief Description of Drawings

Fig. 1 is a table showing an example of information recorded in a utilization status storage unit 102.
Fig. 2 is a diagram showing an example of a time series of data 106 in a data storage unit 101.
Fig. 3 is a block diagram showing an example of a configuration of a first exemplary embodiment.
Fig. 4 is a flow chart illustrating an example of operation of a combination generation unit 103.
Fig. 5 is a flow chart illustrating an example of operation of a discard determination unit 104.
Fig. 6 is a diagram showing an example of a configuration of a specific example of the first exemplary embodiment.
Fig. 7 is a block diagram showing an example of a configuration of an exemplary embodiment.
Fig. 8 is a diagram showing an example of a time series of data 106 in the data storage unit 101.
Fig. 9 is a block diagram showing an example of a configuration of a second exemplary embodiment.

### Description of Embodiments

Hereinafter, exemplary embodiments of the present invention will be described using drawings. In all the drawings, respective identical signs are given to the same constituent elements, and their descriptions are omitted appropriately.

Each unit constituting a device according to each exemplary embodiment includes a control unit, a memory, a program loaded on the program, a storage unit for storing the program such as a hard disk, an interface for network connection and the like, and is realized by an optional combination of hardware and software. Unless otherwise noted, there is no restriction on methods and devices for their realization.

The control unit comprises a CPU (Central Processing Unit) and the like. The control unit operates an operating system and controls the whole of the device. The control unit also reads a program and the data out of a recording medium equipped on a drive device or the like, for example, into the memory and executes various processes according to the program and the data.

The recording medium is, for example, an optical disc, a flexible disc, a magneto-optical disc, an external hard disk, a semiconductor memory or the like, and records a computer program in a computer-readable form. The computer program may also be downloaded from an external computer not illustrated in drawings which is connected to a communication network.

Here, block diagrams used in description of the respective exemplary embodiments each show blocks in terms of functional units, not in terms of a configuration of hardware units. These functional blocks are each realized by an optional combination of hardware and software. In these diagrams, constituent units of each exemplary embodiment may be illustrated such that they are realized in a single physically connected device, but there is no restriction on a means for realizing them. That is, systems of respective exemplary embodiments may be realized by the use of two or more physically separated devices which are connected with each other by wire or wireless.

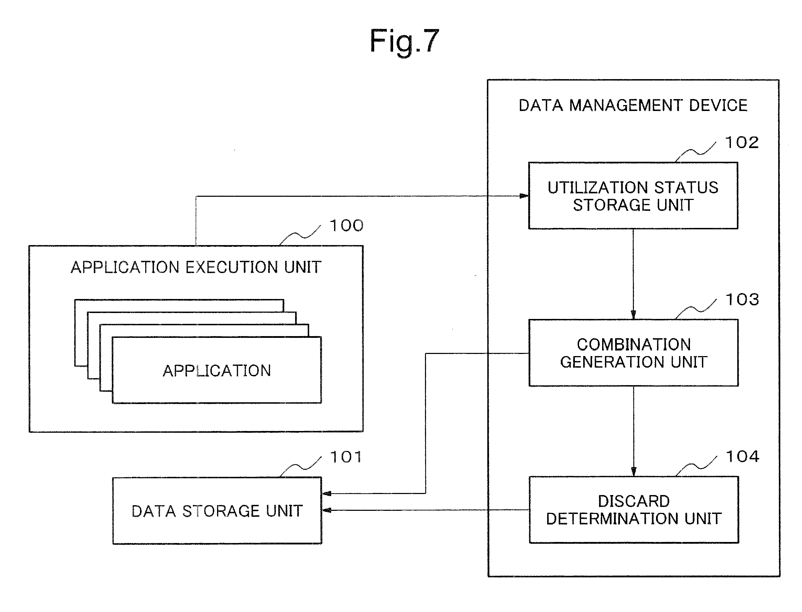

First, using Fig. 7, an outline of the data management device, which is an example of the present invention, will be described below.

The data management device includes a utilization status storage unit 102, a combination generation unit 103 and a discard determination unit 104. The utilization status storage unit 102 stores a combination of data classes (described later) regarding data 106 used by each application. An application execution unit 100 which executes the application notifies the utilization status storage unit 102 of the data class of the data 106 at each time of starting and ending of using the data 106 by the application. Here, the application execution unit 100 may notify the utilization status storage unit 102 of the combination of the data classes of the data 106 with respect to each of one or more applications it executes.

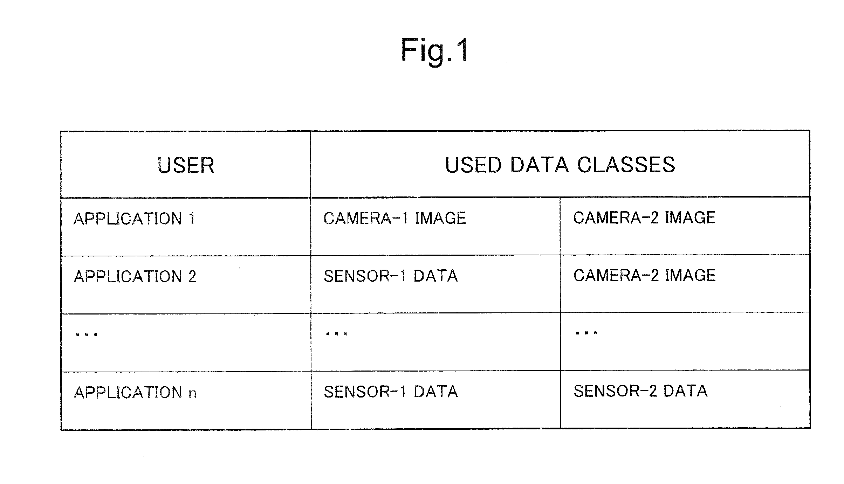

The utilization status storage unit 102 stores the combination of an identifier indicating an application using the data 106 and identifiers indicating the respective data classes of the one or more data 106 used by the application execution unit 100 as utilization status irformation. Fig. 1 is an example of a utilization status information table in the utilization status information storage unit 102 which manages such utilization status information in the form of a table. In the utilization status information table, for example, the identifier of the application is stored as a "user", and a combination of the identifiers indicating the respective data classes of the data 106 used by the application is stored as "used data classes". Although Fig. 1 shows a case of the data class combination each including two data classes as an example, the number of the data classes included in one combination may also be three or more.

The combination generation unit 103 refers to a plurality of pieces of utilization status information stored in the utilization status storage unit 102. The combination generation unit 103 generates a combination of the data 106, each data 106 associated with the data classes stored in the utilization status storage unit 102 and each data 106 were generated at times close to each other (within a prescribed time interval) regarding all of the data 106 stored in the data storage unit 101 as subjects. Alternatively, instead of regarding all of the data 106 as the subjects of the above-described data combination creation, the combination generation unit 103 may perform the creation limiting the subjects to the data 106 whose generation times or access times are old (for example, the data to be determined to be discard subjects based on the above-mentioned LRU criterion). Because the data 106 in the data storage unit 101 are updated continually, the combination generation unit 103 is desired to be operated repeatedly such as by being operated periodically. It is possible that, as a result of the combination generation unit 103 generating the combination of the data 106 in relation to a plurality of pieces of utilization status information stored in the utilization status storage unit 102, one data 106 belongs to a plurality of different combinations.

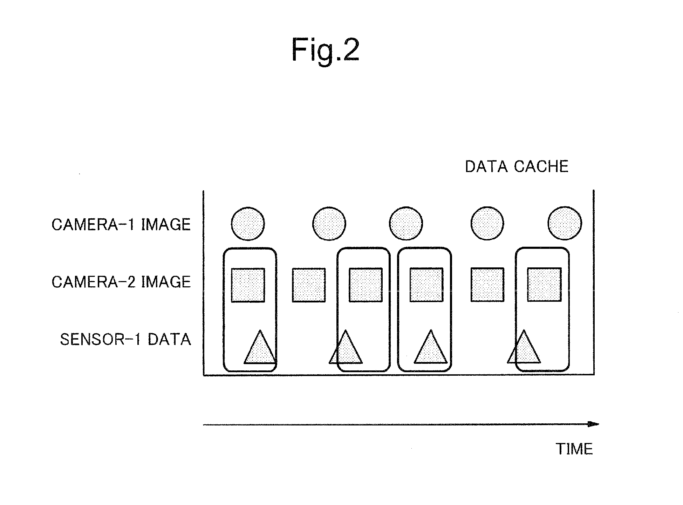

Fig. 2 shows an example of the combinations of the data 106 in the data storage unit 101. Fig. 2 shows a situation where the three data classes referred to as camera-1 image, camera-2 image and sensor-1 data exist, data 106 of the respective data classes are expressed by a circle, a square and a triangle, respectively, and the data are stored in the data storage unit 101 in a manner to align them from the left to the right in the order of recentness of generation time. Description will be given of a case where, in such a situation of the data storage unit 101, the combination generation unit 103 generates a data class combination "used data classes: sensor-1 data, camera-2 image", which is the combination of the data classes described in the second row "user: application 2" in the utilization status information table shown in Fig. 1. The combination generation unit 103 generates the combination of the data 106 generated at times close to each other. For example, the combination generation unit 103 generates the combinations of the data 106 surrounded by a square line in Fig. 2. In this example, it is indicated that four combinations are generated and two of the data 106 of the camera-2 image class are not included in any of the combinations. Here, the case where the generation times of the two data 106 are close to each other may be defined as a case such as where those data 106 are generated relatively within a certain time interval which is determined in advance with respect to each application using the data 106, or where those data 106 are generated relatively within a time interval which is properly determined by an administrator or the like according to situations. There is no particular restriction on a method of defining closeness between generation times. The administrator or the like may also define closeness in generation time between three or more data 106. Accordingly, it may be determined that a combination of the data 106 generated by the combination generation unit 103 is a combination including three or more data 106. The case where the generation times of three or more data 106 are close to each other may be defined as a case such as where all of the data 106 are generated relatively within a prescribed time interval, or where, if setting one of the data 106 of a specific data class 1 as a reference, the other data 106 of the other data classes are generated relatively within a prescribed time interval with the data of the data class 1 centered. It may also be defined as any other cases.

The discard determination unit 104 is started up such as when the amount of free space in the data storage unit 101 becomes small and it thus becomes necessary to generate new free space, and selects the data 106 to be discarded from the data storage unit 101.

The discard determination unit 104 receives, from the combination generation unit 103, information on the data 106 which were not combined with any other data by the combination generation unit 103. The discard determination unit 104 selects the data 106 and determines them to be discard subjects.

Further, if a sufficient amount of free space cannot be generated in the data storage unit 101 only by the discard determination unit 104 discarding the data 106 belonging to no combination, the discard determination unit 104 may discard the data 106 which belongs to a smaller number of combinations. Description will be given below of an example of a process of this case performed by the discard determination unit 104.

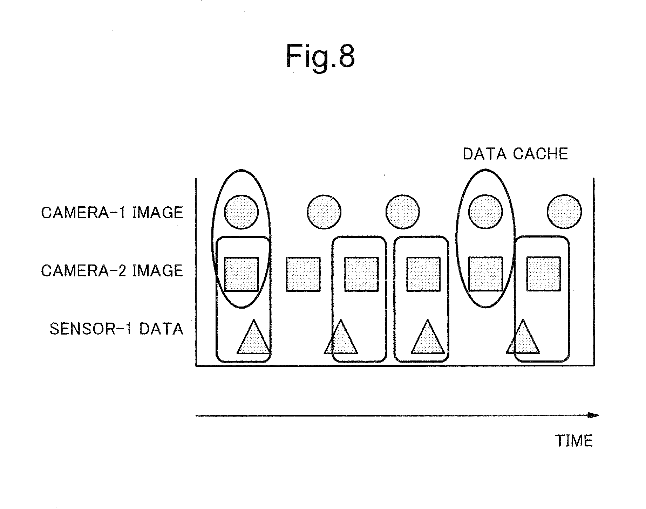

For example, when, with respect to the data class combination "used data classes: camera-1 image, camera-2 image" in the first row of Fig. 1, which is associated with the "user: application 1", the combination generation unit 103 generated the combinations of the data 106 of these data classes, the combinations of the data 106 surrounded by an oval line in Fig. 8 are generated, for example. In this example, it is indicated that two combinations are generated and three of the data 106 of the camera-1 image data class are not included in any of the combinations.

The discard determination unit 104 receives, from the combination generation unit 103, information on the data 106 which were not combined with any other data by the combination generation unit 103. The discard determination unit 104 selects the data 106 and determines them to be discard subjects. In the example shown in Fig. 8, the three data associated with the camera-1 image data class and the data 106 associated with the camera-2 image data class surrounded by neither of a square line or an oval line are determined to be discard subjects. It is because those data 106 are not included in any of the combinations. Then, if a sufficient amount of free space cannot be generated in the data storage unit 101 by only discarding those data 106. the discard determination units 104 further discards the data 106 which belongs to a smaller number of the combinations. For example, the discard determination unit 104 does not discard any data 106 belonging to two combinations nor any data 106 combined with those data 106. and does discard all the other data 106. In the example in Fig. 8, it is recognized that the leftmost data 106 of the camera-2 image data class generated at the most recent time is surrounded by both a square and an oval lines, and it thus is the data 106 belonging to two combinations. On the other hand, the other data 106 are each data included either in only one combination surrounded by only an oval or a square line or that included in none of the combinations. Accordingly, the discard determination unit 104 does not discard the leftmost data 106 of the camera-2 image data class generated most recently nor the data 106 combined with the aforementioned data 106, that is, the data of the camera-1 image data class and that of the sensor-1 data class which are located most left in Fig. 8 and hence were generated most recently, and does determine all of the other data to be discard subjects.

By the above method, the data discard from the data storage unit 101 can be realized in a manner to preferentially retain the combinations of the data 106 of a plurality of the different data classes generated at times close to each other. As a result, the hit rate to the data 106 when the application uses such combinations of the data 106 can be improved.

### <Exemplary Embodiment 1>

Next, a first exemplary embodiment of the present invention will be described.

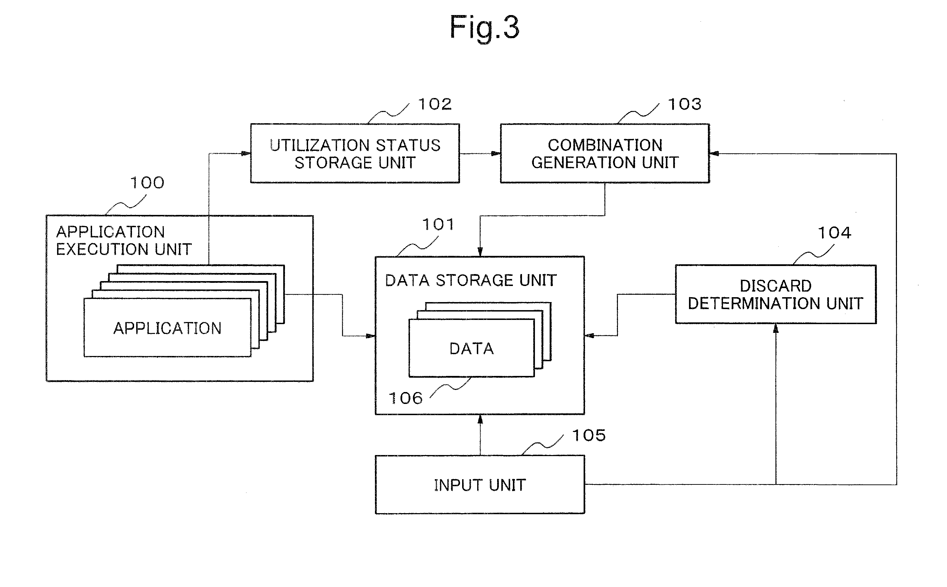

Referring to Fig. 3, a data management device 1 according to the present exemplary embodiment comprises the application execution unit 100, the data storage unit 101 for storing the data 106, the utilization status storage unit 102, the combination generation unit 103, the discard determination unit 104 and an input unit 105.

These units each operate as follows, if sketched out.

The input unit 105 sequentially inputs the data 106 and the time the data 106 was generated, in a manner to be associated with each other, and stores them in the data storage unit 101. Here, the time the data 106 was generated may be the time the input unit 105 acquired the data 106. If the input unit 105 records the data 106 into the data storage unit 101 instantaneously after its acquisition, the above-mentioned time may be the time the data storage unit 101 stores the data 106. Information on the time is properly acquired, for example, by the input unit 105 or the like from a clock within the data management device 1, which is not illustrated in the drawing, or from the outside of the device.

The data 106 is associated with a reference count by the combination generation unit 103, besides an above-mentioned generation time and stored in the data storage unit 101. The reference count is a counter which is increased by one, every time the data is determined to belong to a combination by the combination generation unit 103 described later, in a process of generating the data combinations performed by the combination generation unit 103. That is, the reference count is a counter indicating how many combinations a certain data 106 belongs to. Here, as long as the reference count is associated with the data 106, it does not need to be stored in the data storage unit 101 along with the data 106. For example, the reference count may be stored in an attribute storage unit not illustrated in the drawing. In this case, only data 106 are stored in the data storage unit 101, and reference counts associated with the respective data are stored in the attribute storage unit. In this way, the combination generation unit 103 may separate reference counts from the respective data 106 and store the reference counts in the attribute storage unit.

The input unit 105 is an input unit such as, for example, a sensor input unit and a camera image input unit. The data 106 are various types of the data such as, for example, information obtained by digitizing a temperature, a humidity value, a sound and the like input from sensors or image information input from a camera.

Operation of the input unit 105 may be started up and stopped by instructions from the application execution unit 100 described later.

If the combination generation unit 103 described later performs creation of a combination of the data 106 every time the data 106 is input by the input unit 105, the input unit 105 may notify the combination generation unit 103 of its having input the data 106 at the time of the input operation.

Because lack of free space in the data storage unit 101 is recognized at the time the input unit 105 adds a new data 106, it may be determined that the input unit 105 starts up the discard determination unit 104 described later.

The application execution unit 100 collects information necessary for operation of the application by accessing the data 106 stored in the data storage unit 101. When starting the use of the data 106, the application execution unit 100 notifies the utilization status storage unit 102 of a combination of one or more data classes associated with the data 106 to be used by the application. The data class is a type of the data 106, and various classes such as, for example, temperature, humidity, image and sound can be considered. Also, the data class of the data 106 may be, for example, the extension or the like of the data 106, and may also be the type of the input unit 105 acquiring the data 106 (a class "sensor-1 data "for data acquired from a sensor 1, a class "camera-1 image" for the image data acquired from a camera 1 and so on). Because various methods are known as a method of associating the data class with the data 106 to the data 106, the method used here will not be described in detail. It is assumed that at a stage the input unit 105 has acquired the data 106, the data 106 and its data class are associated with each other, and information representing the data class is thus attached to the data 106. Here, as long as the data class is associated with the data 106, it does not need to be stored in the data storage unit 101 along with the data 106. For example, the data class may be stored in an attribute storage unit not illustrated in the drawing. In this case, only data 106 are stored in the data storage unit 101. and the data classes associated with the respective data are stored in the attribute storage unit. In this way, the input unit 105 may separate the data classes from the respective data 106 and thus store the data classes in the attribute storage unit. At the time the application execution unit 100 ends the use of the data 106 in the data storage unit 101, it notifies the utilization status storage unit 102 of the ending of the use.

The utilization status storage unit 102 stores, as utilization status information, information obtained by combining the application and one or more data classes associated with the data 106 being used or used in the past by the application. As shown in Fig. 1, the utilization status storage unit 102 stores the combination of the identifier of the application using the data 106 and the identifiers indicating the respective data classes of one or more the data 106 used by the application. The utilization status storage unit 102 may store in advance the data classes used by applications or may properly acquire them from the application execution unit 100.

The combination generation unit 103 acquires utilization status information on the data 106 from the utilization status storage unit 102. Then, retrieving from the data storage unit 101 the combinations of the data 106 of the respective data classes indicated by the utilization status information, the combination generation unit 103 searches for the combinations of the data 106 in which each data 106 having the same respective data classes and each generation times are close (within a prescribed time interval) to each other.

Further, every time the retrieved data 106 is found to belong to a different combination, the combination generation unit 103 increases the reference count of the data 106 by one.

The combination generation unit 103 is operated as follows. For example, the combination generation unit 103 may be operated (1) periodically (2) prior to starting up of the discard determination unit 104 (3) every time the input unit 105 adds a new data 106 to the data storage unit 101.

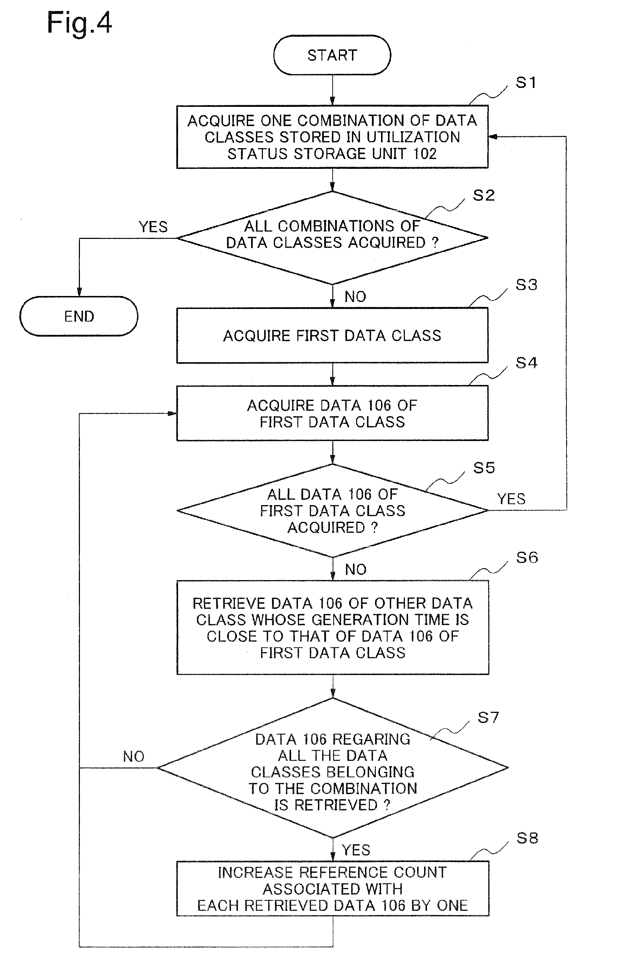

The process performed by the combination generation unit 103 will be described below referring to the flow chart in Fig. 4.

First, the combination generation unit 103 acquires one of the data class combinations stored in the utilization status storage unit 102 (step S 1). If all of the data class combinations stored in the utilization status storage unit 102 have already been acquired in previous steps (including the case no data class combination is stored in the utilization status storage unit 102) (Yes at the step S2), the combination generation unit 103 ends this process since there exists no combination to extract.

Next, the combination generation unit 103 extracts the data 106 of a first data class included in the acquired data class combination from the data storage unit 101(step S3). The first data class is one data class properly selected from the data classes included in the data class combination acquired by the combination generation unit 103 from the utilization status storage unit 102. The combination generation unit 103 may determine, for example, the data class of the data 106 generated at the lowest frequency out of one or more data classes included in the combination to be the first data class. In this case, for example, by properly acquiring generation frequencies of the data 106 from the input unit 105, the combination generation unit 103 may acquire information about the data class of the data 106 of the lowest generation frequency.

The combination generation unit 103 extracts the data 106 associated with the data class extracted in the step S3 from the data storage unit 101 (step S4). A range of the extraction of the data 106 by the combination generation unit 103 may be, for example, in accordance with a starting up timing of the combination generation unit 103, any one of (1) all of the data 106 associated with the relevant data class stored in the data storage unit 101 (2) a group of the data 106 associated with the relevant data class which have been determined to be discard subjects (3) a group of the data 106 of the relevant data class which have been added to the data storage unit 101 recently (during the time period from a prescribed time ago to the present) (4) a group of the data 106 acquired in a time period designated by an administrator or the like. From a population consisting of any one of the above-described (1) to (4) or a proper combination of them, the combination generation unit 103 extracts the data 106 of the relevant data class one by one and then proceeds to a step S6 (No at the step S5). Here, if all of the data 106 in the population have already been extracted (Yes at the step S5), the combination generation unit 103 returns to the step S1.

The combination generation unit 103 searches for the data 106 of another data class included in the relevant data class combination and was generated at a time close to that of the above extracted data 106 of the first data class (step S6). That is, from the data 106 of a second data class which is different from the first data class, the combination generation unit 103 retrieves the data 106 whose generation time is close to that of the data 106 of the first data class. Next, if there exists a third data class which is different from the first and the second data classes, the combination generation unit 103 searches for, out of the data 106 of the third data class, the data 106 whose generation time is close to both that of the data 106 of the first data class and that of the data 106 of the second data class. For example, taking as an example a case all data 106 are generated within a prescribed time period, an example of the search for the data 106 of the third data class by the combination generation unit 103 will be described. The combination generation unit 103 extracts one data 106 of the third data class from the data storage unit 101 and also acquires its generation time *γ.* Next, from one of the already retrieved combinations, the combination generation unit 103 acquires a generation time *α* of one data 106 of the first data class and a generation time *β* of one data 106 of the second data class. Then, the combination generation unit 103 calculates values of | *α*- *β*|, |*β* - *γ*| and *γ* - α|*,* and only if the largest one of the calculated values is smaller than a certain time value determined in advance, the combination generation unit 103 adds the data 106 of the third data class into the data combination. In this way, the combination generation unit 103 searches for the data 106 each are of the respective ones of all the data classes belonging to the relevant data class combination and were generated at times close to each other. Here, a method of generating the combinations of the data 106 by the combination generation unit 103 is not limited to the method described above.

If having found the data 106 regarding all the data classes belonging to the relevant data class combination and were generated at times close to each other (Yes at a step S7), the combination creation units 103 increases the reference count associated with each of the retrieved data 106 by one (step S8) and returns to the step S4. Also if such the data 106 of generation times close to each other could not been found, the combination generation unit 103 returns to the step S4 (No at the step S7).

The discard determination unit 104 is operated when, for example, the amount of free space in the data storage unit 101 has become equal to or smaller than a certain value. The discard determination unit 104 discards, for example, any one of the following kinds of the data 106. That is, the discard determination unit 104 performs control to secure required free space by preferentially discarding (i) the data 106 of relatively old generation times (for example, the data for which a prescribed time period or a time period determined for each application has passed since their generation times) (ii) the data 106 whose reference count is zero (iii) the data 106 whose reference count is smaller than a prescribed value. The operation of the discard determination unit 104 may be executed according to all of these criteria and may also be executed according to an optional combination of the criteria (i) to (iii) including either or both of (ii) and (iii).

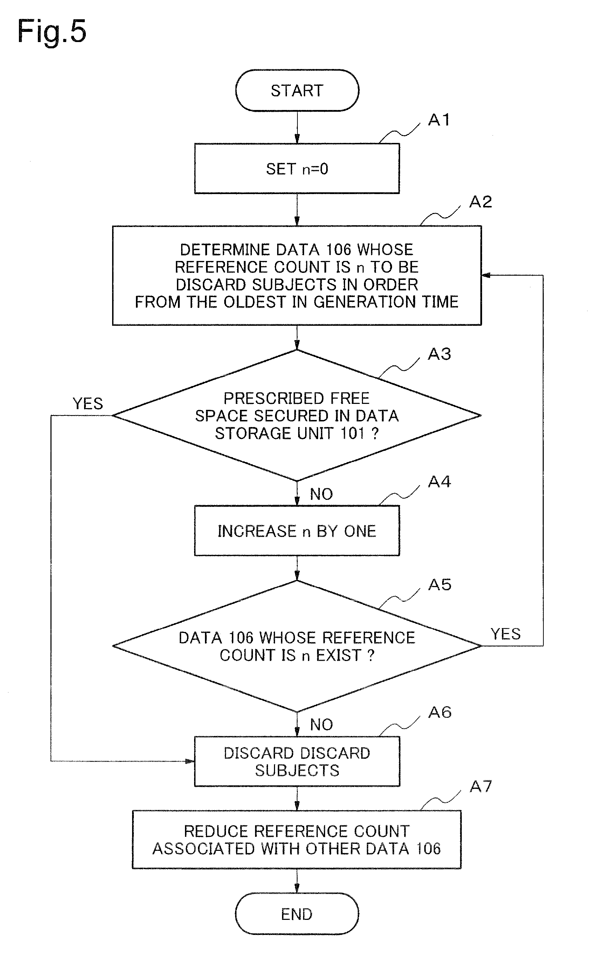

Next, using a flow chart in Fig. 5, description will be given of an example of determining a discard subject by the discard determination unit 104 according to the combination of all the criteria (i) to (iii).

First, the discard determination unit 104 sets zero for a variable n (step A1). Next, referring to the data storage unit 101, the discard determination unit 104 determines the data 106 whose reference count have the same value as that of the variable n to be discard subjects (step A2). If a certain amount of free space determined in advance can be secured by discarding the data 106 determined to be discard candidates (step A3), the process proceeds to a step A6. If such amount of free space cannot be secured, the discard determination unit 104 increases the value of the variable n by one (step A4) and, as a result, if there exists no data 106 whose reference count has the same value as that of the value n (No at a step A5), it proceeds to the step A6, and returns to the step A2 if there exists any such data (Yes at the step A5). Finally, the discard determination unit 104 actually discards the data 106 determined to be discard subjects from the data storage unit 101 (step A6) and performs a process of reducing the value of the reference count associated with each of the other data 106 belonging to the cancelled combinations by discarding by the number of decrease of the combinations they each belong to (step A7).

### <Specific Example of Exemplary Embodiment 1>

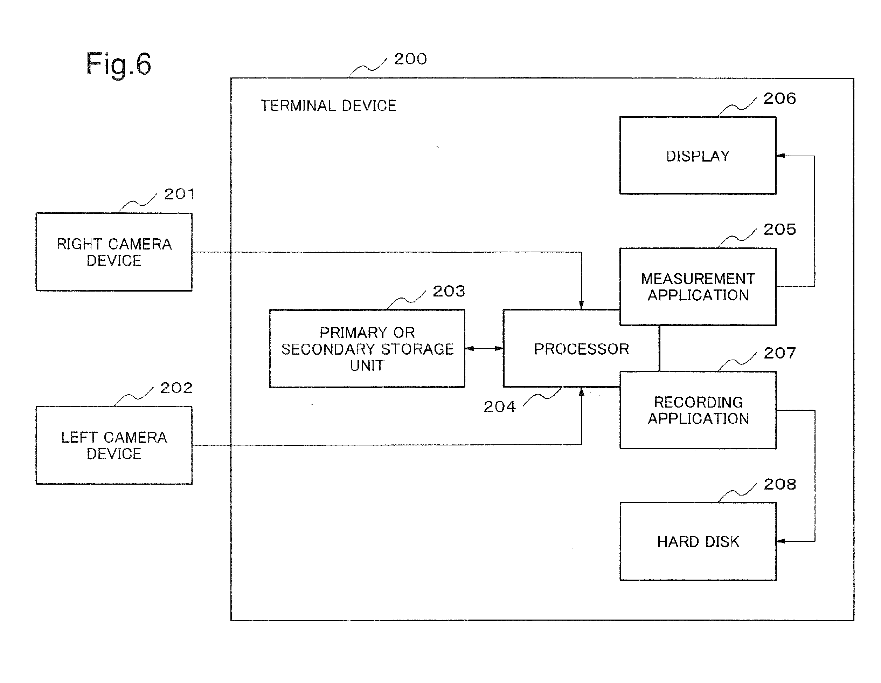

Next, based on Fig. 6, an example of operation of the present exemplary embodiment will be described using a specific example.

In this specific example, the above-described units 100 to 106 are assumed to be functions which are provided in a terminal device 200 installed in a car. Specifically, the data storage unit 101 is assumed to be configured in a primary or secondary storage unit 203. The application execution unit 100, the utilization status storage unit 102, the combination generation unit 103. the discard determination unit 104 and the input unit 105 are each assumed to be a function executed on a processor 204.

The data 106 dealt with in the present specific example are the still image data captured by a camera. It is assumed that the still image data are input by the input unit 105 via a right camera device 201 and a left camera device 202 which are installed on the right and left sides, respectively, of the moving direction of a car. It is then assumed that the data class of the data 106 is "right camera image" if the data is acquired via the right camera 201 and is "left camera image" if acquired via the left camera 202.

The application execution unit 100 is assumed to execute two kinds of applications. One of the applications executed by the application execution unit 100 is a measurement application 205 which, by the use of the parallax between a right camera image captured by the right camera device 201 and a left camera image captured by the left camera device 202, measures the distance between the car and a car running in front of the car. It is assumed that, when the distance is measured by the measurement application 205, the distance measurement is performed using a right camera image and a left camera image which are captured almost simultaneously.

The other application is a recording application 207 which, for the purpose of being used in a post hoc analysis of when a car accident or the like occurred, records a forward image of a car into a hard disk 208. Here, not all camera images are recorded, but only images at the time a large change in the images has occurred are detected and recorded. Specifically, the record application 207 detects a distinctive portion of each of right camera and left camera images and records only images having such a distinctive portion. Here, the distinctive portion of image is, for example, a portion of image showing a large change rate in brightness value, RGB (Red, Green and Blue) value or the like from that portion of an image captured a prescribed time interval earlier than the image. Because what method is used for the detection of a distinctive portion of image by the recording application 207 and detection of what kind of distinction is effective in a post hoc analysis of when a car accident occurred are not main subjects of the present invention, their descriptions will be omitted, and various known methods are assumed to be used.

When such as running on a highway, the application execution unit 100 starts up the measurement application 205 and thus notifies the utilization status storage unit 102 of the use of two data classes including the right camera image data classes associated with the data 106 and the left camera image data classes associated with the data 106. Subsequently, out of the data 106 of the right camera and the data 106 of the left camera each exiting in the data storage unit 101, the application execution unit 100 searches for the combination of the data 106 whose generation times are close to each other and calculates the distance to the car by the use of image processing. In case the distance is smaller than a prescribed threshold value, in case the distance is changing to be smaller or in case the distance has abruptly become small, the application execution unit 100 gives a warning to the driver via a display 206 installed in the terminal apparatus 200. While the measurement application 205 is in operation, the combination generation unit 103 and the discard determination unit 104 operate, according to the above-described flow charts in Figs. 4 and 5, respectively, to retain the data 106 necessary for the operation of the measurement application 205 and discard unnecessary data 106.

The recording application 207 is intended for the use such as in a post hoc analysis of when a car accident occurred. Accordingly, unlike the measurement application 205, the recording application 207 may use the data 106 in the data storage unit 101 without notifying the utilization status storage unit 102 of the used data 106. It is because the recording application 207 may use camera images with no concern for their generation times and may thus perform the distinction detection by using camera images recorded in the data storage unit 101 at the time of using them. Therefore, while the application execution unit 100 is executing only the record application 207, it is not necessary to operate the mechanism of the present invention with respect to discard of the data in the data storage unit 101. However, when the application execution unit 100 executes the record application 207 and the measurement application 205 simultaneously, by operating the mechanism of the present invention and performing discard of the data, the hit rate to the data 106 used by the applications is improved.

The data management device 1 in the present exemplary embodiment can improve the hit rate to the data 106 used by applications in the device or a system comprising the system, while temporarily storing the data each including its generation time generated within the device or input from the outside. It is because the data management device 1 performs determination of the data discard using not only the attribute information on the individual data 106 but also the combinations of a plurality of classes of the data 106, stored in the data storage unit 101, whose generation times are close to each other.

### <Exemplary Embodiment 2>

Next, a data management device 2 of a second exemplary embodiment of the present invention will be described.

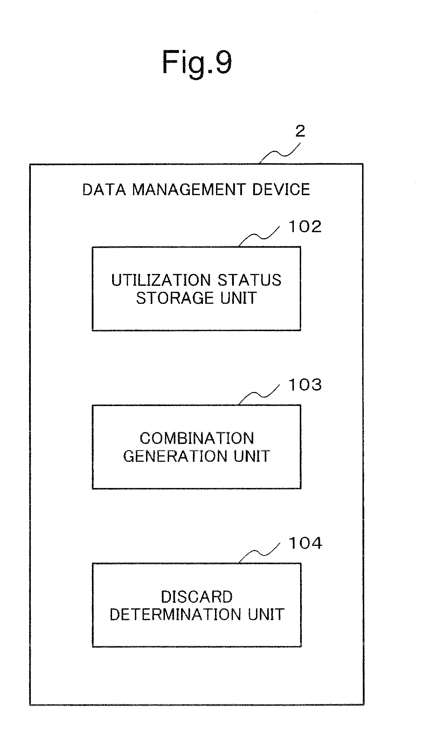

As shown in Fig. 9, a data management device 2 in the present exemplary embodiment comprises the utilization status storage unit 102, the combination generation unit 103 and the discard determination unit 104.

The utilization status storage unit 102 has a function to store, as utilization status information, information obtained by combining an application and one or more data classes of the data 106 which are being used or were used in the past by the application.

The combination generation unit 103 acquires the utilization status information on the data 106 from the utilization status storage unit 102. Further, the combination generation unit 103 has a function to retrieve from the data storage unit 101 the combination of the data classes indicated by the utilization status information and search for the combination of the data 106 of the same respective data classes as the aforementioned ones whose generation times are close to each other.

The discard determination unit 104 has a function to determine the data 106 belonging to none of the combinations of the data 106 generated by the combination generation unit 103 to be a discard candidate.

According to such a configuration, provided is the data management device which comprises: utilization status storage means for storing the combination of a plurality of data classes used by the application; combination creation means for extracting, from data storage means storing data which is given one of the aforementioned data classes, the combination of the data in which a difference of generation times between the data in the combination is within a prescribed time interval, from the combination of the aforementioned data given respective ones of the aforementioned data classes stored in the aforementioned utilization status storage means; and discard determination means for determining, from the aforementioned data stored in the aforementioned data storage means, data other than those belonging to the extracted aforementioned combination to be candidates of deletion.

The data management device 2 in the present exemplary embodiment can improve the hit rate to the data 106 used by the application. It is because the data management device 2 performs determination of the data discard using not only the attribute information on the individual data 106 but also the combination of a plurality of classes of the data 106, stored in the data storage unit 101, whose generation times are close to each other.

Although the present invention has been described above with reference to exemplary embodiments, the present invention is not limited to the above-described exemplary embodiments. Various changes in configurations and details of the present invention which are understood by those skilled in the art may be made within the scope of the present invention.

This application is based upon and claims the benefit from Japanese Patent Application No. 2010-277112 filed on December 13, 2010, the disclosure of which is incorporated herein in its entirety by reference..

### Reference Signs List

- 100: application execution unit
- 101: data storage unit
- 102: utilization status storage unit
- 103: combination creation unit
- 104: discard determination unit
- 105: input unit
- 106: data
- 200: terminal device
- 201: right camera device
- 202: left camera device
- 203: primary or secondary storage unit
- 204: processor
- 206: display
- 208: hard disk

## Claims

1. A data management device comprising:
utilization status storage means for storing a combination of a plurality of data classes used by an application;
combination creation means for extracting, from data storage means storing data which is given one of the data classes, combination of the data in which a di fference of generation times between the data in the combination is within a prescribed time interval, from the combination of the data given respective ones of the data classes stored in the utilization status storage means; and
discard determination means for determining, from the data stored in the data storage means, data other than those belonging to the extracted combination to be candidates of deletion.

2. The data management device according to claim 1, wherein the discard determination means determines the data belonging to smaller number of the combination to be candidates of deletion preferentially of the data stored in the data storage means.

3. The data management device according to claims 1 or 2, wherein the data storage means stores the data class of the data and the number of the combination the data belongs to in a manner to be associated with each other.

4. The data management device according to claims 1 or 2 further comprising attribute storage means for storing the data class of the data and the number of the combination the data belongs to in a manner to be associated with the data.

5. A management system comprising:
the data management device according to any one of claims 1 to 3;
data input means for inputting the data after attaching with the acquired time from outside as its generation time;
application execution means for using the input data; and
the utilization status storage means, in the data management device according to any one of claims 1 to 4, for storing the data classes of the data used by the application acquired from the application execution means,

6. A data management program causing a computer to execute:
a combination creation step for extracting, from data storage means storing data which is given one of the data classes, a combination of the data in which a difference of generation times between the data in the combination is within a prescribed time interval, from the combination of the data given respective ones of the data classes stored in utilization status storage means storing a combination of a plurality of data classes used by an application; and
a discard determination step for determining, from the data stored in the data storage means, data other than those belonging to the extracted combination to be candidates of deletion.

7. The data management program according to claim 6. which causes the computer to execute the discard determination step for determining the data belonging to smaller number of the combination to be candidates of deletion preferentially of the data stored in the data storage means.

8. The data management program according to claims 6 or 7 which causes the computer to further execute:
a data input step for inputting the data after attaching with the acquired time from outside as its the generation time;
an application execution step for using the input data; and
a utilization status storage step for acquiring the data classes of the data used by the application and storing them in the utilization status storage means.

9. A data management method comprising:
extracting, from data storage means storing data which is given one of data classes, a combination of the data in which a difference of generation times between the data in the combination is within a predetermined time interval, from the combination of the data given respective ones of the data classes stored in utilization status storage means storing a combination of a plurality of data classes used by an application: and
determining, from the data stored in the data storage means, data other than those belonging to the extracted combination to be candidates of deletion.

10. The data management method according to claim 9, wherein the data belonging to smaller number of the combination are determined to be candidates of deletion preferentially of the data stored in the data storage means,
